# EUROPEAN PATENT APPLICATION

(11) **EP 3 264 203 A1**
(43) Date of publication of application: **03.01.2018**
(21) Application number: 15885812.6
(22) Date of filing: 20.03.2015
(51) Int. Cl.: G04G 17/06

(54) **INTELLIGENT INTERACTION METHOD, EQUIPMENT AND SYSTEM**

(71) Applicant: Huawei Technologies Co. Ltd., Shenzhen, Guangdong 518129 (CN)
(72) Inventor: WANG, Xilin, Shenzhen Guangdong 518129 (CN)
(74) Representative: Pfenning, Meinig & Partner mbB
(86) International application number: PCT/CN2015/074743
(87) International publication number: WO 2016/149873

(57) **Abstract**

Embodiments of the present invention provide an intelligent interaction method, a device, and a system. The method includes: receiving, by smart glasses, control information sent by a smart watch, where the control information is generated by the smart watch according to a user input operation that is received, and a pointer icon is set on a man-machine interface of the smart glasses; and controlling, by the smart glasses, movement of the pointer icon according to the control information. The embodiments of the present invention are not limited by a structure of the smart glasses, and functions that can be implemented are greatly increased. In addition, the present invention is not limited by a scenario, thereby improving convenience of interaction between the user and the smart glasses.

## Description

### TECHNICAL FIELD

Embodiments of the present invention relate to wearable technologies, and in particular, to an intelligent interaction method, a device, and a system.

### BACKGROUND

With development of wearable technologies, smart watches, smart glasses and the like are becoming wearable devices that are widely popularized among consumers.

For the smart glasses, currently a touchpad on a leg of the smart glasses is used as an input interaction tool, and man computer interaction is performed in combination with voice input. However, the interaction method has the following disadvantages:

Due to a size limitation of the touchpad, only one-dimensional movement can be input, and corresponding menus can only be made into one-dimensional scrolling menus, whose function is undiversified. In addition, voice input is efficient, but an application scenario is limited. For example, both a noisy environment and a public place such as a library needing quietness limit use of voice input.

### SUMMARY

Embodiments of the present invention provide an intelligent interaction method, a device, and a system, to resolve problems of undiversified functions and a limited application scenario of the foregoing interaction method.

According to a first aspect, an embodiment of the present invention provides an intelligent interaction method, where
a pointer icon is set on a man-machine interface of smart glasses, where the method includes:
receiving, by the smart glasses, control information sent by a smart watch, where the control information is generated by the smart watch according to a user input operation that is received; and
controlling, by the smart glasses, movement of the pointer icon according to the control information.

With reference to the first aspect, in a first possible implementation manner of the first aspect, the control information includes displacement information, where the displacement information includes a displacement that corresponds to the user input operation and that is obtained by a touchscreen of the smart watch; and
the controlling, by the smart glasses, movement of the pointer icon according to the control information includes:
controlling, by the smart glasses, the pointer icon to move by the displacement.

With reference to the first possible implementation manner of the first aspect, in a second possible implementation manner of the first aspect, the control information further includes force information, and the force information is used to represent a pressing force corresponding to the user input operation; and
the controlling, by the smart glasses, the pointer icon to move by the displacement includes:
controlling, by the smart glasses, a movement speed of moving the pointer icon according to the force information.

With reference to the first aspect, in a third possible implementation manner of the first aspect, the control information includes angle information, and the angle information includes a longitudinal rotation angle of the smart watch that is worn on an arm and that rotates about an axial direction of the arm, and a transverse rotation angle of the smart watch about an axial direction that is perpendicular to the arm by using an angle of the smart watch at a preset starting point as a reference when the arm is horizontally placed in front of a body; and
the controlling, by the smart glasses, movement of the pointer icon according to the control information includes:
controlling, by the smart glasses, the pointer icon to move, starting from the preset starting point, by a distance of p × *β* along an X-axis of the man-machine interface, and by a distance of p × *α* along a Y-axis of the man-machine interface, where *α* represents the longitudinal rotation angle, *β* represents the transverse rotation angle, and p is a preset constant.

According to a second aspect, an embodiment of the present invention provides an intelligent interaction method, including:
receiving, by smart glasses, control information sent by a smart watch, where the control information is an angle of the smart watch that is worn on an arm and that rotates about an axial direction of the arm when the arm is horizontally placed in front of a body; and
controlling, by the smart glasses, scrolling of menus of the smart glasses on a man-machine interface of the smart glasses according to the control information, where a quantity of the scrolled menus on the man-machine interface depends on a magnitude of the angle.

According to a third aspect, an embodiment of the present invention provides an intelligent device, where a pointer icon is set on a man-machine interface of the intelligent device, and the intelligent device includes:
a receiver, where the receiver is configured to receive control information sent by a smart watch, where the control information is generated by the smart watch according to a user input operation that is received; and
a processor, where the processor is configured to control movement of the pointer icon according to the control information.

With reference to the third aspect, in a first possible implementation manner of the third aspect, the control information includes displacement information, where the displacement information includes a displacement that corresponds to the user input operation and that is obtained by a touchscreen of the smart watch, and the processor is specifically configured to control the pointer icon to move by the displacement.

With reference to the first possible implementation manner of the third aspect, in a second possible implementation manner of the third aspect, the control information further includes force information, the force information is used to represent a pressing force corresponding to the user input operation, and the processor is further configured to:
control a movement speed of moving the pointer icon according to the force information.

With reference to the third aspect, in a third possible implementation manner of the second aspect, the control information includes angle information, the angle information includes a longitudinal rotation angle of the smart watch that is worn on an arm and that rotates about an axial direction of the arm, and a transverse rotation angle of the smart watch about an axial direction that is perpendicular to the arm by using an angle of the smart watch at a preset starting point as a reference when the arm is horizontally placed in front of a body, and the processor is specifically configured to:
control the pointer icon to move, starting from the preset starting point, by a distance of p × *β* along an X-axis of the man-machine interface, and by a distance of p × *α* along a Y-axis of the man-machine interface, wherein *α* represents the longitudinal rotation angle, *β* represents the transverse rotation angle, and p is a preset constant.

With reference to any one of the third aspect or the first to the third possible implementation manners of the third aspect, in a fourth possible implementation manner of the third aspect, the intelligent device is smart glasses.

According to a fourth aspect, an embodiment of the present invention provides an intelligent device, including:
a receiver, where the receiver is configured to receive control information sent by a smart watch, and the control information is an angle of the smart watch that is worn on an arm and that rotates about an axial direction of the arm when the arm is horizontally placed in front of a body; and
a processor, where the processor is configured to control scrolling of menus of the intelligent device on a man-machine interface of the intelligent device according to the control information, where a quantity of the scrolled menus on the man-machine interface depends on a magnitude of the angle.

With reference to the fourth aspect, in a first possible implementation manner of the fourth aspect, the intelligent device is smart glasses.

According to a fifth aspect, an embodiment of the present invention provides an intelligent interaction system, including:
a smart watch, configured to generate control information according to a user input operation that is received; and
the intelligent device according to any one of the third aspect or the fourth aspect, where
the smart watch is in communication connection with the intelligent device.

According to the intelligent interaction method, the device, and the system in the embodiments of the present invention, a smart watch is used as a recipient of a user input operation. A structure of the smart watch is used to convert the user input operation into control information, so as to control movement of a pointer icon on a man-machine interface of smart glasses, implementing interaction between a user and the smart glasses. The interaction method is not limited by a structure of the smart glasses. Therefore, functions that can be implemented by the interaction method are greatly increased. In addition, the interaction method is not limited by a scenario, thereby improving convenience of interaction between the user and the smart glasses.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a diagram of an example of an application scenario of an intelligent interaction method according to the present invention;
FIG. 2 is a flowchart of Embodiment 1 of an intelligent interaction method according to the present invention;
FIG. 3A is a diagram of an example of a correspondence between force information (S) and a pressing force (F) in Embodiment 2 of an intelligent interaction method according to the present invention;
FIG. 3B is a diagram of another example of a correspondence between force information (S) and a pressing force (F) in Embodiment 2 of an intelligent interaction method according to the present invention;
FIG. 4 is a diagram of an example of another application scenario of an intelligent interaction method according to the present invention;
FIG. 5 is a flowchart of Embodiment 2 of an intelligent interaction method according to the present invention;
FIG. 6 is a diagram of an example of still another application scenario of an intelligent interaction method according to the present invention;
FIG. 7 is a diagram of an example of yet another application scenario of an intelligent interaction method according to the present invention; and
FIG. 8 is a schematic structural diagram of Embodiment 1 of an intelligent device according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Smart glasses are also known as intelligent glasses. The smart glasses have an independent operating system, a user may install programs that are provided by software service providers such as software and games, and functions of adding an agenda, map navigation, interaction with a friend, photographing and videotaping, and carrying out a video call with a friend may be completed by means of voice or operation, and wireless network access may be implemented by using a mobile communications network.

A basic architecture of the smart glasses includes a parallel frame that can be placed transversely on the bridge of a nose, a touchpad that is disposed on a leg of the frame, a wide stripe computer that is located on a right side of the frame, and a transparent display screen.

The technical solutions in the embodiments of the present invention are applicable to a scenario in which smart glasses and a smart watch are worn simultaneously and the smart glasses need an external pointer tool, and a scenario in which a portable intelligent device, for example, a personal computer (Personal Computer, PC for short), which has no mouse and needs an external pointer tool.

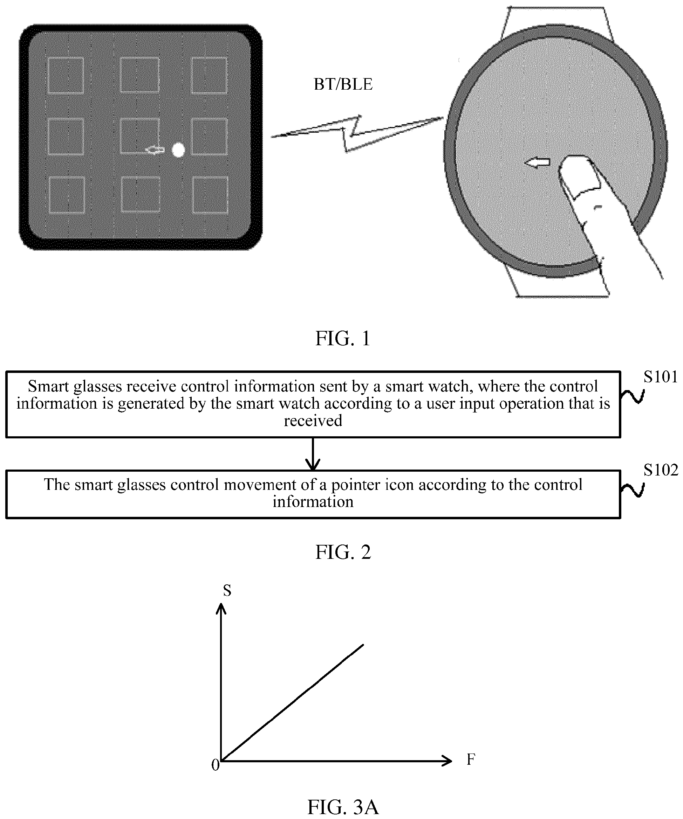

An embodiment of the present invention provides an intelligent interaction system. The intelligent interaction system includes: a smart watch and an intelligent device. The smart watch is configured to generate control information according to a user input operation that is received. The intelligent device is any intelligent device described below. The smart watch is in communication connection with the intelligent device. As shown in FIG. 1, in this example, an intelligent device is described by using smart glasses as an example. Communication is performed between a smart watch and the smart glasses by using a technical path of Blue-Tooth ((Blue-Tooth, BT for short) or Blue-Tooth Low Energy (Blue-Tooth Low Energy, BLE for short).

FIG. 2 is a flowchart of Embodiment 1 of an intelligent interaction method according to the present invention. An embodiment of the present invention provides an intelligent interaction method, to implement interaction between a user and smart glasses. The method may be executed by any apparatus for executing an intelligent interaction method, and the apparatus may be implemented by means of software and/or hardware. In this embodiment, the apparatus may be integrated into the smart glasses, and a pointer icon is set on a man-machine interface of the smart glasses. As shown in FIG. 2, the method includes:
S101: The smart glasses receive control information sent by a smart watch, where the control information is generated by the smart watch according to a user input operation that is received.
S102: The smart glasses control movement of the pointer icon according to the control information.

Specifically, a user performs touch input on a touchscreen of the smart watch or performs key-press input on the smart watch; the smart watch generates, according to a user input operation (including the touch input and the key-press input), control information that is used to control a pointer icon on a man-machine interface (Man Machine Interface, MMI for short) of the smart glasses, and sends the control information to the smart glasses. The sending, by the smart watch, the control information to the smart glasses may be implemented by using a technical path of BT or BLE, but the present invention is not limited thereto.

The smart glasses control movement of the pointer icon according to the control information, so that the user interacts with the smart glasses.

It should be noted that a pointer icon is set on a man-machine interface of smart glasses, where the pointer icon is, for example, a cursor. The setting described herein includes implementation by using software or implementation by installing an application (Application, APP for short) in the smart glasses. For example, a layer is suspended on the man-machine interface, and the layer is configured to display the pointer icon.

According to this embodiment of the present invention, a smart watch is used as a recipient of a user input operation. A structure of the smart watch is used to convert the user input operation into control information, so as to control movement of a pointer icon on a man-machine interface of smart glasses, implementing interaction between a user and the smart glasses. The interaction method is not limited by a structure of the smart glasses. Therefore, functions that can be implemented by the interaction method are greatly increased. In addition, the interaction method is not limited by a scenario, thereby improving convenience of interaction between the user and the smart glasses.

The following describes the technical solutions of the present invention in details by using several specific embodiments.

In an embodiment, the control information may include displacement information. The displacement information may include a displacement that corresponds to the user input operation and that is obtained by a touchscreen of the smart watch. In this embodiment, S102 may include: controlling, by the smart glasses, a pointer icon to move by the foregoing displacement.

Specifically, the smart watch reads a built-in sensor of the touchscreen, obtains coordinate information related to contact positions of a finger, and obtains the displacement information by means of coordinate calculation. The smart watch obtains a displacement D1 ((X2-X1), (Y2-Y1)) by comparing coordinates P1 (X1, Y1) and P2 (X2, Y2) of the contact positions of the finger that have been collected twice. The smart watch can send the coordinate or displacement information to the smart glasses (or PC) by using a BT or BLE path. Correspondingly, the smart glasses obtain the displacement information from the smart watch. After entering an application function of the pointer icon, the smart glasses (or PC) implement corresponding movement of the pointer icon on an MMI according to the obtained coordinate or displacement information. For example, as shown in FIG. 1, the finger flicks left (arrow direction) on the touchscreen of the smart watch, and correspondingly, the pointer icon on the MMI of the smart glasses moves left.

Based on above, the control information may further include force information. The force information is used to represent a pressing force corresponding to the user input operation. The smart watch reads a built-in force sensor of the touchscreen, and obtains a pressing force. In this case, the controlling, by the smart glasses, a pointer icon to move by the foregoing displacement may include: controlling, by the smart glasses according to the force information, a movement speed of moving the pointer icon to implement interaction between a user and the smart glasses, where a magnitude of the force information determines the movement speed of the pointer icon. For example, the movement speed of the pointer icon may increase as the force information increases, or the movement speed of the pointer icon may decrease as the force information increases.

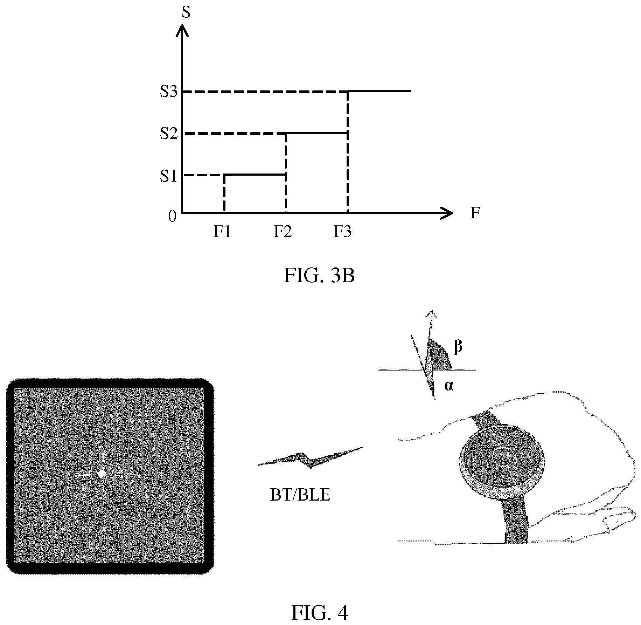

It should be further noted that the force information may be consecutive or segmentally discrete. A correspondence between the force information and the pressing force includes multiple types. For example, the force information (S) is directly proportional to the pressing force (F), as shown in FIG. 3A; or the correspondence between the force information (S) and the pressing force (F) is one-to-many, as shown in FIG. 3B. The force information corresponding to pressing forces ranging from 0 to F1 is 0, the force information corresponding to pressing forces ranging from F1 to F2 is S1, and so on. A displacement of the pointer icon on the smart glasses or the PC in a corresponding time period is: D2 = a × S × D1 (a is a preset constant), where S may be S1, S2, or S3.

In another embodiment, control information may include angle information. The angle information may include a longitudinal rotation angle of the smart watch that is worn on an arm and that rotates about an axial direction of the arm, and a transverse rotation angle of the smart watch about an axial direction that is perpendicular to the arm by using an angle of the smart watch at a preset starting point as a reference when the arm is horizontally placed in front of a body. In this case, S102 may include: controlling, by the smart glasses, the pointer icon to move, starting from the preset starting point, by a distance of p × *β* along an X-axis of the man-machine interface, and by a distance of p × *α* along a Y-axis of the man-machine interface, where *α* represents the longitudinal rotation angle, *β* represents the transverse rotation angle, p is a preset constant, and the X-axis and the Y-axis are perpendicular to each other on the man-machine interface.

Referring to FIG. 4, a gyroscope in a smart watch is used as a sensor of a pointer icon of smart glasses. Using an angle during calibration as a reference, when a rotation angle of the smart watch about an axial direction of a forearm is *α*, and a rotation angle of the smart watch about an axis that is perpendicular to the forearm is *β*, a displacement D (X, Y) of the pointer icon of a target device (may be the smart glasses, a PC, or the like) relative to an original point (for example, a geometric center point of an eyeglass of the smart glasses) to a destination point can be obtained by means of D_{Y} = p × *α* and D_{X} = p × *β.*

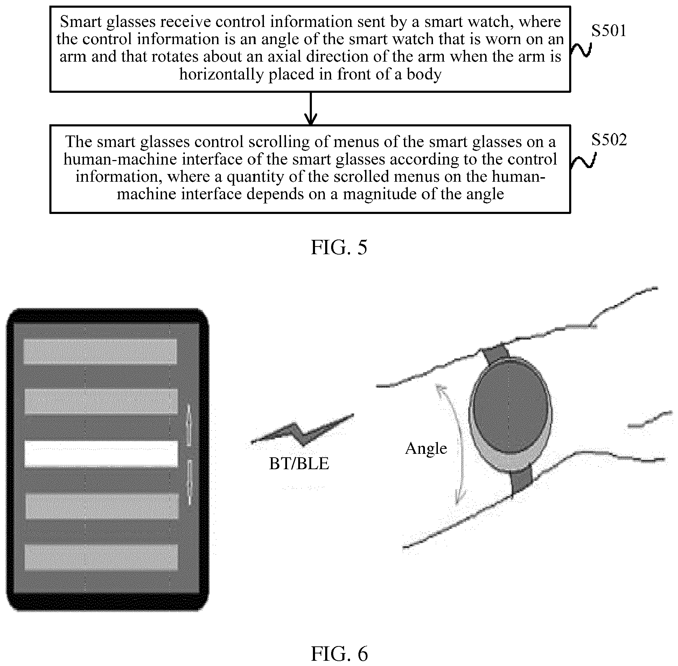

FIG. 5 is a flowchart of Embodiment 2 of an intelligent interaction method according to the present invention. This embodiment of the present invention provides an intelligent interaction method, to implement interaction between a user and smart glasses. The method may be executed by any apparatus for executing an intelligent interaction method, and the apparatus may be implemented by means of software and/or hardware. In this embodiment, the apparatus may be integrated into smart glasses. As shown in FIG. 5, the method includes:
S501: Smart glasses receive control information sent by a smart watch, where the control information is an angle of the smart watch that is worn on an arm and that rotates about an axial direction of the arm when the arm is horizontally placed in front of a body.
S502: The smart glasses control, scrolling of menus of the smart glasses on a man-machine interface of the smart glasses according to the control information, where a quantity of the scrolled menus on the man-machine interface depends on a magnitude of the angle.

This embodiment is applicable to an operation of smart glasses of scrolling menus, for example, early google glass (google glass).

In this embodiment, the smart glasses can control the scrolling of the menus of the smart glasses according to the control information, to implement interaction between a user and the smart glasses. According to this embodiment, by sensing variations in an azimuth of the smart watch, for example, upward, downward, leftward, or rightward tilt of the smart watch, the scrolling of the menus of the smart glasses is output.

As shown in FIG. 6, the same as looking at a smart watch by a user in a normal status, a left arm is placed horizontally in front of a body, and the smart watch that is worn on the left arm rotates about an axial direction of the left arm; the smart watch obtains an angle by which the smart watch rotates about the axial direction of the left arm by reading data from a gyroscope (Gyroscope), and then transfers control information to smart glasses by using a path of BT or BLE, so as to determine a quantity of scrolled menus of the smart glasses. A menu that is currently selected is highlighted on an MMI of the smart glasses to remind a user of a status of the current menu, so that the user can adjust a rotation angle of the smart watch to reach a position of a pre-selected menu.

According to this embodiment of the present invention, a smart watch is used as a recipient of a user input operation. A structure of the smart watch is used to convert the user input operation into control information, so as to control display of a menu on a man-machine interface of smart glasses, implementing interaction between a user and the smart glasses. The interaction method is not limited by a structure of the smart glasses. Therefore, functions that can be implemented by the interaction method are greatly increased. In addition, the interaction method is not limited by a scenario, thereby improving convenience of interaction between the user and the smart glasses.

Furthermore, the smart glasses can further receive startup information sent by the smart watch. Based on the above, after the smart glasses detect the startup information, a menu is displayed on the man-machine interface. For example, when detecting an action that a finger of a user touches the touchscreen, the smart watch transfers the startup information to the smart glasses, so as to enter the menu of the smart glasses.

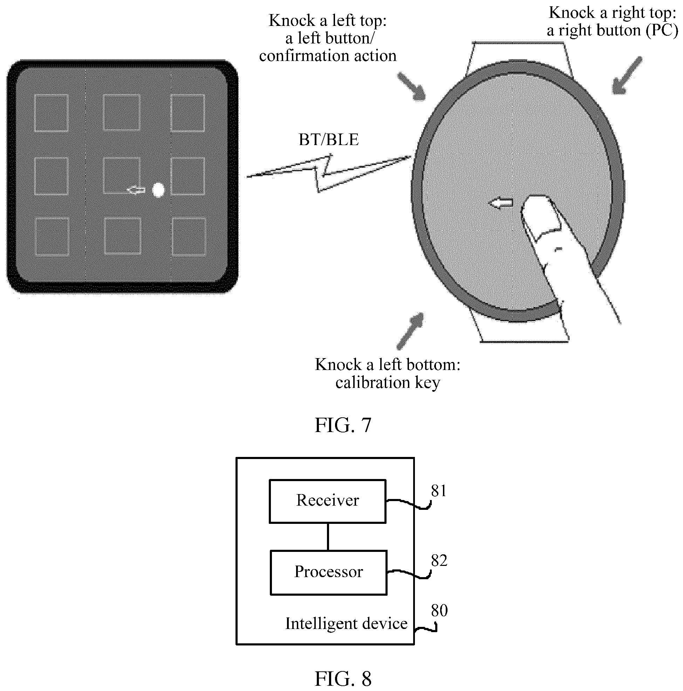

It should be complementarily noted that the user can further implement different function and shortcut keys of the smart glasses by knocking different side faces of the smart watch. For example, using a gesture of transversely placing the left arm and looking at the watch as a reference, knocking a left top of the smart watch can implement a confirmation action of the smart glasses. For another example, in a PC application, using a gesture of transversely placing the left arm and looking at the watch as a reference, knocking a left top, a right top, and a left bottom of the smart watch can respectively implement a left mouse button, a calibration key, and a right mouse button, as shown in FIG. 7.

FIG. 8 is a schematic structural diagram of Embodiment 1 of an intelligent device according to the present invention. This embodiment of the present invention provides an intelligent device, to implement interaction between a user and the intelligent device. As shown in FIG. 8, the intelligent device 80 includes: a receiver 81, and a processor 82.

The receiver 81 is configured to receive control information sent by a smart watch. The control information is generated by the smart watch according to a user input operation that is received. The processor 82 is configured to control movement of a pointer icon according to the control information. The pointer icon is set on a man-machine interface of the intelligent device 80.

The intelligent device in this embodiment may be configured to execute the technical solution of the method embodiment shown in FIG. 2, the implementation principles and technical effects thereof are similar, and details are not described herein again.

In an implementation manner, the control information includes displacement information. The displacement information may include a displacement that corresponds to the user input operation and that is obtained by a touchscreen of the smart watch. The processor 82 may be specifically configured to: control the pointer icon to move by the displacement.

Furthermore, the control information further includes force information. The force information is used to represent a pressing force corresponding to the user input operation. The processor 82 may be further configured to: control, according to the force information, a movement speed of moving the pointer icon to implement interaction between a user and the intelligent device 80, where a magnitude of the force information determines the movement speed of the pointer icon.

A correspondence between the force information and the pressing force may include at least the following types: the force information being directly proportional to the pressing force, a one-to-many correspondence between the force information and the pressing force, or the like.

In another implementation manner, the control information may include angle information. The angle information may include a longitudinal rotation angle of the smart watch that is worn on an arm and that rotates about an axial direction of the arm, and a transverse rotation angle of the smart watch about an axial direction that is perpendicular to the arm by using an angle of the smart watch at a preset starting point as a reference when the arm is horizontally placed in front of a body. A pointer icon is set on a man-machine interface of the smart glasses. The processor 82 may be specifically configured to: control the pointer icon to move, starting from the preset starting point, by a distance of p × *β* along an X-axis of the man-machine interface, and by a distance of p × *α* along a Y-axis of the man-machine interface, where *α* represents the longitudinal rotation angle, *β* represents the transverse rotation angle, p is a preset constant, and the X-axis and the Y-axis are perpendicular to each other on the man-machine interface.

It should be complementarily noted that the intelligent device 80 may be smart glasses.

Referring to the structure shown in FIG. 8, the receiver 81 is configured to receive control information sent by a smart watch. The control information is an angle of the smart watch that is worn on an arm and that rotates about an axial direction of the arm when the arm is horizontally placed in front of a body. The processor 82 is configured to control scrolling of menus of the intelligent device on a man-machine interface of the intelligent device 80 according to the control information, where a quantity of the scrolled menus on the man-machine interface depends on a magnitude of the angle.

The intelligent device in this embodiment may be configured to execute the technical solution of the method embodiment shown in FIG. 5, the implementation principles and technical effects thereof are similar, and details are not described herein again.

In the several embodiments provided in the present application, it should be understood that the disclosed apparatus and method may be implemented in other manners. For example, the described device embodiment is merely an example. For example, the unit or module division is merely logical function division and may be other division in actual implementation. For example, a plurality of units or modules may be combined or integrated into another system, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, may be located in one position, or may be distributed on a plurality of network units. Some or all of the modules may be selected according to actual needs to achieve the objectives of the solutions of the embodiments.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. An intelligent interaction method, wherein a pointer icon is set on a man-machine interface of smart glasses, and the method comprises:
receiving, by the smart glasses, control information sent by a smart watch, wherein the control information is generated by the smart watch according to a user input operation that is received; and
controlling, by the smart glasses, movement of the pointer icon according to the control information.

2. The method according to claim 1, wherein the control information comprises displacement information, and the displacement information comprises a displacement that corresponds to the user input operation and that is obtained by a touchscreen of the smart watch; and
the controlling, by the smart glasses, movement of the pointer icon according to the control information comprises:
controlling, by the smart glasses, the pointer icon to move by the displacement.

3. The method according to claim 2, wherein the control information further comprises force information, and the force information is used to represent a pressing force corresponding to the user input operation; and
the controlling, by the smart glasses, the pointer icon to move by the displacement comprises:
controlling, by the smart glasses, a movement speed of moving the pointer icon according to the force information.

4. The method according to claim 1, wherein the control information comprises angle information, and the angle information comprises a longitudinal rotation angle of the smart watch that is worn on an arm and that rotates about an axial direction of the arm, and a transverse rotation angle of the smart watch about an axial direction that is perpendicular to the arm by using an angle of the smart watch at a preset starting point as a reference when the arm is horizontally placed in front of a body; and
the controlling, by the smart glasses, movement of the pointer icon according to the control information comprises:
controlling, by the smart glasses, the pointer icon to move, starting from the preset starting point, by a distance of p × *β* along an X-axis of the man-machine interface, and by a distance of p × *α* along a Y-axis of the man-machine interface, wherein *α* represents the longitudinal rotation angle, *β* represents the transverse rotation angle, and p is a preset constant.

5. An intelligent interaction method, comprising:
receiving, by smart glasses, control information sent by a smart watch, wherein the control information is an angle of the smart watch that is worn on an arm and that rotates about an axial direction of the arm when the arm is horizontally placed in front of a body; and
controlling, by the smart glasses, scrolling of menus of the smart glasses on a man-machine interface of the smart glasses according to the control information, wherein a quantity of the scrolled menus on the man-machine interface depends on a magnitude of the angle.

6. An intelligent device, wherein a pointer icon is set on a man-machine interface of the intelligent device, and the intelligent device comprises:
a receiver, configured to receive control information sent by a smart watch, wherein the control information is generated by the smart watch according to a user input operation that is received; and
a processor, wherein the processor is configured to control movement of the pointer icon according to the control information.

7. The intelligent device according to claim 6, wherein the control information comprises displacement information, the displacement information comprises a displacement that corresponds to the user input operation and that is obtained by a touchscreen of the smart watch, and the processor is specifically configured to:
control the pointer icon to move by the displacement.

8. The intelligent device according to claim 7, wherein the control information further comprises force information, the force information is used to represent a pressing force corresponding to the user input operation, and the processor is further configured to:
control a movement speed of moving the pointer icon according to the force information.

9. The intelligent device according to claim 6, wherein the control information comprises angle information, the angle information comprises a longitudinal rotation angle of the smart watch that is worn on an arm and that rotates about an axial direction of the arm, and a transverse rotation angle of the smart watch about an axial direction that is perpendicular to the arm by using an angle of the smart watch at a preset starting point as a reference when the arm is horizontally placed in front of a body, and the processor is specifically configured to:
control the pointer icon to move, starting from the preset starting point, by a distance of p × *β* along an X-axis of the man-machine interface, and by a distance of p × *α* along a Y-axis of the man-machine interface, wherein *α* represents the longitudinal rotation angle, *β* represents the transverse rotation angle, and p is a preset constant.

10. The intelligent device according to any one of claims 6 to 9, wherein the intelligent device is smart glasses.

11. An intelligent device, comprising:
a receiver, wherein the receiver is configured to receive control information sent by a smart watch, wherein the control information is an angle of the smart watch that is worn on an arm and that rotates about an axial direction of the arm when the arm is horizontally placed in front of a body; and
a processor, wherein the processor is configured to control scrolling of menus of the intelligent device on a man-machine interface of the intelligent device according to the control information, wherein a quantity of the scrolled menus on the man-machine interface depends on a magnitude of the angle.

12. The intelligent device according to claim 11, wherein the intelligent device is smart glasses.

13. An intelligent interaction system, comprising:
a smart watch, configured to generate control information according to a user input operation that is received; and
the intelligent device according to any one of claims 6 to 12, wherein
the smart watch is in communication connection with the intelligent device.
